# EUROPÄISCHE PATENTSCHRIFT

(11) **EP 1 026 979 B1**
(45) Veröffentlichungstag und Bekanntmachung des Hinweises auf die Patenterteilung: **10.04.2002**
(21) Anmeldenummer: 98961041.5
(22) Anmeldetag: 23.10.1998
(51) Int. Cl.: A47K 3/12, F16B 9/02

(54) **KÖRPERSTÜTZE FÜR BADEWANNEN**
BODY SUPPORT FOR BATH TUBS
SUPPORT POUR LE CORPS A MONTER DANS UNE BAIGNOIRE

(30) Priorität: 28.10.1997 DE 29719954 U; 11.02.1998 WO PCT/DE98/00366; 12.08.1998 DE 29814443 U
(43) Veröffentlichungstag der Anmeldung: 16.08.2000
(73) Patentinhaber: Beck, Rosmarie, 72250 Freudenstadt (DE); Daunderer, Klaus, 93191 Rettenbach (DE)
(72) Erfinder: Beck, Rosmarie, 72250 Freudenstadt (DE); Daunderer, Klaus, 93191 Rettenbach (DE)
(74) Vertreter: Klocke, Peter, Dipl.-Ing.
(86) Internationale Anmeldenummer: DE9803125
(87) Internationale Veröffentlichungsnummer: WO9921468

(56) Entgegenhaltungen:
- BE-A- 862 202
- FR-A- 1 370 361
- GB-A- 1 091 959
- GB-A- 2 238 718
- US-A- 5 413 441

## Beschreibung

Die vorliegende Erfindung betrifft eine Körperstütze für Badewannen, die als Zubehörteil in die Badewanne eingelegt und entsprechend leicht entfernt werden kann. Die Körperstütze besteht aus einer Stange mit an der Stange angebrachten Halterungen zum Abstützen der Stange an den beiden gegenüberliegenden Längsseiten der Badewanne, die einen runden, rechteckigen oder ovalen Querschnitt aufweisen kann und in dem mittleren Bereich eine Mulde zur Aufnahme des Nackens aufweist. Mindestens eine der Halterungen ist als Distanzausgleich- und Verspannelement zur Fixierung der Körperstütze in beliebiger Höhe an den Seitenwänden der Badewanne ausgebildet, wobei die Halterungen an den Enden der Stange angeordnet sind, sich im wesentlichen in Längsachsenrichtung der Stange erstrecken und als becherförmiger Stopfen ausgebildet sind, der in seinem Inneren eine auf den Umfang der Stange abgestimmte Ausnehmung zur Aufnahme des Endbereichs der Stange und eine der Badewannenwand zugewandte Anlagefläche mit einem Radius zur Erzeugung eines Saugeffekts aufweist.

Insbesondere Kleinkinder lassen sich erfahrungsgemäß ungern die Haare waschen, da sie Seife und/oder Wasser im Gesicht nicht mögen. Beim Kopfwaschen der Kleinkinder in der Badewanne ist es daher sehr umständlich und schwierig einerseits den Kopf zu waschen und andererseits dafür zu sorgen, daß der Kopf des Kindes weit genug nach hinten gelangt, um Haarwaschmittel, Wasser über das Hinterteil des Kopfes abspülen zu können, um eine Berührung mit dem Gesicht zu vermeiden. Häufig dürfen auch verletzte und mit einem Verband versehene Körperteile nicht mit Wasser in Berührung kommen. Außerdem ist bekannterweise bei einer weitgehend mit Wasser gefüllten Badewanne eine bequeme, entspannte Stellung durch den Benutzer entweder dadurch, daß die wirksame Länge der Badewanne nicht mit der Körpergröße des Benutzers übereinstimmt oder daß infolge der glattflächigen Beschaffenheit der Badewanne der steten Gefahr des Ausrutschens begegnet werden muß, nur schwer zu finden. Insbesondere für Kinder und kleingewachsene bzw. ältere und gebrechliche oder verletzte Personen kann daher die Benutzung einer Badewanne mit Unbequemlichkeiten oder Gefahren verbunden sein.

Aus der CH-A-658 373 ist eine Körperstütze für eine entspannte, bequeme Lage eines Badewannennutzers bekannt. Diese umfaßt einen Stützkörper, der einen gebogenen Mittelbereich und zwei geradlinige Endbereiche aufweist. Letztere gelangen auf den Längswänden der Badewanne zur Auflage, während der Kopf des Benutzers auf dem gebogenen Mittelteil aufliegt. Dieser kann ggf. gepolstert sein. Da diese bekannte Körperstütze auf dem Rand aufliegt, muß der gebogene Bereich eine sehr starke Krümmung aufweisen, um damit unter die Wasserlinie zu gelangen. Dies macht einerseits diese Körperstütze großflächig und verlangt außerdem eine relativ starke Abwinklung durch die geforderte Auflage auf dem Badewannenrand. Diese starke Abwinklung ist technisch schlecht oder nur sehr aufwendig zu realisieren. Infolgedessen hat sich diese bekannte Körperstütze in der Praxis nicht durchgesetzt.

Aus der BE-A-862 202 ist eine Körperstütze mit den Merkmalen des Oberbegriffs bekannt. Diese bekannte Körperstütze weist eine Verjüngung in der Stange als Mulde auf, die aufwendig herzustellen ist und eine Schwächung hinsichtlich der Tragfähigkeit darstellt. Die Halterungen zur Aufnahme der Stangen weisen einen Innenraum mit einem wesentlich größeren Durchmesser als den Durchmessern der Stange auf. Daher ist es erforderlich, daß dieser Haltebereich aus einem harten tragfähigen Material hergestellt ist, während die Saugfläche aus einem weichen, elastischem Material hergestellt ist. Die Verbindung der Saugfläche mit dem harten Material ist ebenfalls aufwendig herzustellen. Die Stopfen weisen einen Hebel auf, mit dem die Saugwirkung der Saugfläche an der Badewannenwand erreicht werden soll. Die Stange selbst ist in axialer Richtung in den Stopfen verschiebbar, so daß bei einem Stoß auf den Hebel und die Saugfläche ein Haftungsverlust eintreten kann. Insgesamt erscheint diese Art der Körperstütze aufwendig in der Herstellung und unpraktisch beim Gebrauch und hinsichtlich Haftungssicherheit.

Die GB-A-1091 959 zeigt eine Körperstütze mit einer geraden Stange und Gummistopfen, die mit einem Gewinde in der Stange befestigt sind. Eine sichere Haltbarkeit insbesondere bei weitausgefahrenem Gewinde ist damit nicht gewährleistet.

Die GB-A-2238 718 offenbart eine Körperstütze mit Saugnäpfen ohne allgemeine technische Angabe über die genaue Realisierung. Verschiedene Länge werden über eine Teleskopstange eingestellt, auch hier ist mit den dargestellten Saugnäpfen zur Befestigung der Stange an der Badewannenwand mit einer nicht ausreichenden Belastbarkeit und Tragkraft zu rechnen.

Die FR-A-1370361 offenbart eine gerade Stange die als Längsausgleich in der Mitte mittels eines Rechts-/Linksgewindes verstellt werden kann. Dies ist aufwendig und teuer. Zur Befestigung an der Badewannenwand weist sie kalottenartige Elemente mit einer Haftbeschichtung auf, die über ein Gelenk zur Anpassung an die Schräge der Badewannenwand mit der Stange verbunden sind. Diese Lösung ist aufwendig und wenig belastbar.

Der vorstehend aufgeführte Stand der Technik zeigt eine Vielzahl von verschiedenen Lösungen, die jedoch alle sich in der Praxis hinsichtlich Haltbarkeit und Handhabbarkeit sowie Stabilität und wirtschaftliche Herstellung nicht durchgesetzt haben.

Der vorliegenden Erfindung liegt daher die Aufgabe zugrunde, eine verbesserte Körperstütze vorzuschlagen.

Diese Aufgabe wird erfindungsgemäß durch eine Körperstütze mit den Merkmalen des Hauptanspruchs gelöst. Weitere vorteilhafte Ausgestaltungen sind den Unteransprüchen zu entnehmen.

Die erfindungsgemäß ausgestaltete Vorrichtung weist einen becherförmigen ausgebildeten Stopfen aus elastischem tragfesten Material auf, der in seinem Inneren eine auf den Umfang der Stange abgestimmte Ausnehmung zur Aufnahme des Endbereichs der Stange enthält. Die Längenverstellung erfolgt kontinuierlich mittels eines Distanzausgleiches- und Verspannelements, das ein verdrehbares Rohrstück umfaßt, das einerseits der stufenlosen Längenverstellung und andererseits der Arretierung dient. Dabei wird das Rohrstück über ein in das stirnseitige Ende der Stange einsteckbares Zwischenstück mit zwei von einander beabstandeten, konzentrisch zur Längsachse angeordneten Führungen mit einem den Stangendurchmesser geringfügig überschreitenden Durchmesser geführt. Zwischen den Wülsten ist ein exzentrischer Zwischenbereich mit einem C-förmig ausgebildeten Spannelement, das über den Zwischenbereich geschoben ist, vorgesehen. Durch Verdrehen des Rohres kann dieses entweder fixiert werden oder entsprechend der erforderlichen Länge axial gegenüber der Stange verschoben werden. Die Führungen sollten mindestens genau so breit wie in dem Zwischenbereich sein, um eine gute Führung des Rohrstücks zu gewährleisten und ein verkanten beim Drehen zu vermeiden. Das Rohrstück bzw. das andere Ende der Stange ist mit seinem freien stirnseitigen Ende in einem entsprechenden einstückig ausgebildeten Stopfen, beispielsweise aus Thermolast K, gehalten. Dieses Material ist einerseits stabil genug, um die normalerweise auftretenden Kräfte zu halten, und andererseits elastisch genug, um eine einfache Montage an dem Rohrstück bzw. der Stange zu gewährleisten und die gewünschten Saugeigenschaften an der der Badewannenwand zugewandten Fläche sicher zu stellen. Die der Badewannenwand zugewandte Fläche ist gegenüber der Längsachse der Ausnehmung entsprechen der Badewannenwand geneigt. Diese Ausbildung erlaubt somit die kontinuierliche Verstellung und Anpassung an jede beliebige Höhe und Neigung der Badewanne, wobei gleichzeitig eine stabile und auch unter Belastung unverrückbare Fixierung an den glatten Wänden der Badewanne sichergestellt ist.

Vorzugsweise beträgt die Neigung der Fläche gegenüber der Längsachse der Ausnehmung um 6 bis 12°, vorzugsweise um 9°, geneigt. Damit wird der Schräge der Badewanne Rechnung getragen und eine gute Stabilität und Rutschfestigkeit gewährleistet. Um Unebenheiten der Seitenwand der Badewanne auszugleichen, weist diese Fläche des Stopfens gemäß einer weiteren Ausbildung am äußeren Randbereich ebenfalls eine Dichtlippe auf.

Um zusätzlich den Zwischenraum zwischen dem Stopfen und der eingesteckten Stange gegen den Eintritt von Feuchtigkeit zu schützen, kann an der Ausnehmungsöffnung eine umlaufende, sich nach innen erstreckende Dichtlippe angeordnet sein.

Um eine Schwenkbewegung des Stopfens als Toleranzausgleich zu erlauben, ist die Ausnehmung im Bereich der Öffnung in einem Stopfen mit einem größeren Querschnitt als im Inneren ausgebildet. Die möglichen Freiheitsgrade und die Schwenkbewegung wird durch die Innenwandung der Ausnehmung beschränkt. So kann beispielsweise die Ausnehmung an Stelle einer zylindrischen Form eine leicht konische Form ausweisen, so daß eine Schwenkbewegung in einem Bereich von ca. 2° möglich ist. Vorteilhafterweise ist das Zwischenstück mittels einer Nut- und Federkonstruktion in der Stange fixiert, wobei die Stange zum Ende der Stange mit größerer Tiefe in die entsprechende Nut des Zwischenstücks eingepreßt ist. Dadurch ist das Zwischenstück sicher in der Stange fixiert und ein ungewolltes Herausbewegen wird durch die tiefere Einkerbung am äußeren Rand sicher verhindert.

Das Rohrstück weist gemäß einer weiteren Ausbildung auf seiner Oberfläche mittels zum besseren Greifen in Form von Aufrauhungen, Wellen, Noppen, Rändlung oder dgl. und/oder eine sich über die Länge des Rohrstückes erstreckende bauchige Wölbung auf. Zusätzlich kann die Innenseite des Rohrstücks mit sich in Längsrichtung erstreckenden Rillen versehen werden, um eine bessere Haftung auf dem Zwischenstück und den Führungen zu gewährleisten.

Gemäß einer bevorzugten Ausführungsform weist die Stange nur an einer Seite ein Distanzausgleich- und Spannelement auf, während an der anderen Seite lediglich ein Stopfen auf die Stange aufgesteckt ist. Um zu gewährleisten, daß die Mulde an jeder Stelle in der Wanne symmetrisch anordenbar ist, ist bei dieser Ausbildung die Mulde unsymmetrisch in der Stange angeordnet, so daß erst nach dem Anbringen des Distanzausgleich- und Spannelements und der beiderseitigen Stopfen eine symmetrische Anordnung bewirkt wird. Um ein Verkannten beim Anpassen an verschiedenen Höhen in der Wanne - und damit auch verschiedene Längen der Stange zu vermeiden, entspricht die Länge des Rohrstücks der Länge vom Anschlag im Stopfen bis zum Beginn der Krümmung in der Stange.

Um der Stange noch mehr Stabilität zu geben und gleichzeitig die Auflagefläche zu vergrößern, weist diese im Bereich der Mulde einen ovalen Querschnitt auf. Darüber ist gemäß einer bevorzugten Ausführungsform in der Mulde als Polsterung ein nichtsaugfähigen Material, das die Stange im Bereich der Mulde auf der unteren Seite umgreift oder als elastisches Rohrmaterial auf die Stange aufgeschoben wird, angeordnet. Damit kann die Polsterung zum Trocknen und Reinigen leicht abgenommen und vor Gebrauch wieder über die Stange schoben werden.

Als Material wird zweckmäßiger Weise ein nicht rostendes Metall wie Aluminium verwendet, das mit einer Pulverbeschichtung in einer RAL-Farbe zwecks optischer Ausgestaltung und Schutz vor Anschlagen und Beschädigungen versehen werden kann.

Die vorstehend beschriebene Körperstütze ist somit durch ihr Gewicht und ihre Konstruktion leicht auf die gewünschte Höhe in der Badewanne anpaßbar und kann bei Nichtbenutzung aufgrund des geringen Platzbedarfs, beispielsweise durch Aufhängen an der Wand, sicher und griffbereit aufbewahrt werden.

Nachfolgend wird die Erfindung anhand von Ausführungsbeispielen näher erläutert. Es stellen dar:
- Figur 1: die Draufsicht auf eine Körperstütze mit Polsterung in der Badewanne;
- Figur 2: die Seitenansicht einer Körperstütze im Gebrauchszustand auf einer im Schnitt dargestellten Badewanne;
- Figur 3: eine Seitenansicht der Stange und ein Querschnitt entlang der Linie A-A;
- Figur 4: einen Längsschnitt durch einen Stopfen;
- Figur 5: eine Schnittdarstellung durch eine Badewanne mit einer Nackenstütze mit einem in der Länge kontinuierlich einstellbaren Distanzausgleichs- und Verspannelementes;
- Figur 6: eine vergrößerte Darstellung des Zwischenstücks mit Klemmelement; und
- Figur 7: die Befestigung des Zwischenstücks an der Stange.

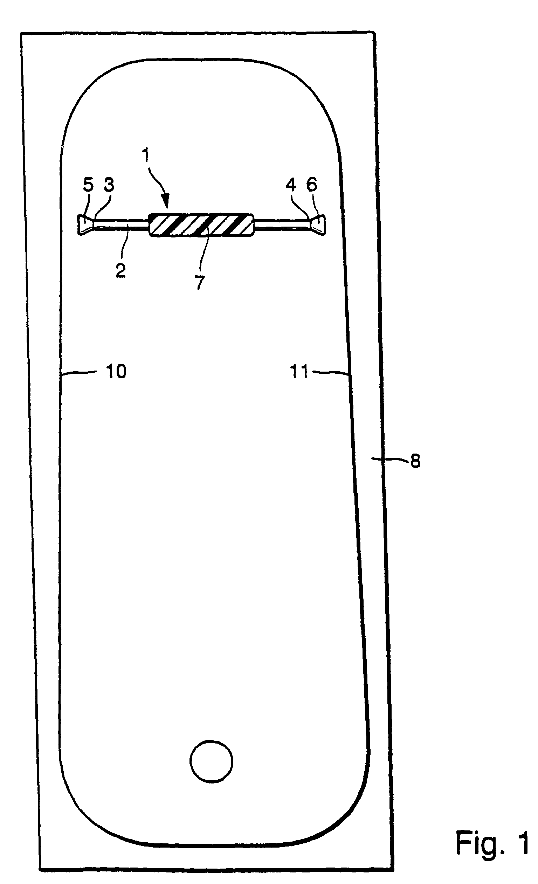

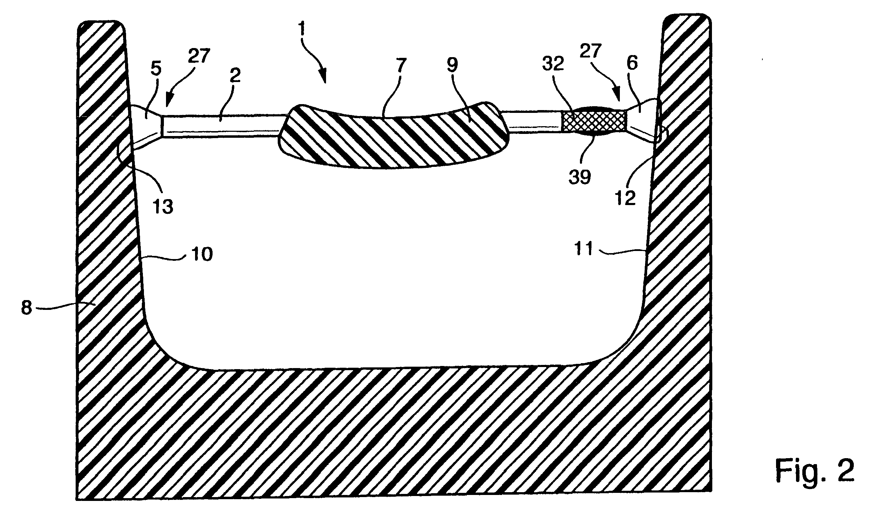

Aus Figur 1 ist die Körperstütze 1 in der Draufsicht im Gebrauchszustand in der Badewanne 8 ersichtlich. Die Körperstütze 1 besteht in diesem Ausführungsbeispiel aus einer rohrförmigen Stange 2, die an ihren Enden 3, 4 mit rundem Querschnitt Stopfen 5, 6 als Halterung 27 (Fig. 2) zum Fixieren an den Seitenwänden 10, 11 der Badewanne aufweist. Außerdem ist schematisch eine Polsterung 9 gezeigt, die aus einem nichtsaugfähigen weichen Material, z. B. einem PE-Schaum, ausgebildet ist.

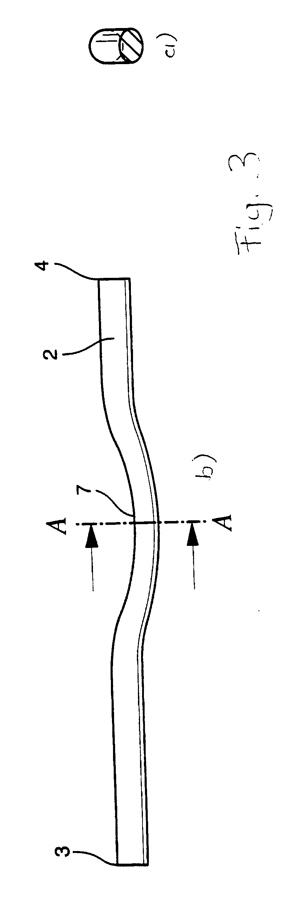

Aus der Darstellung in Figur 3 ist die Ausbildung der Stange 2 und die Mulde 7 im mittleren Bereich der Stange 2 ersichtlich, die hinsichtlich der Tiefe, je nach verschiedenen Anforderungswünschen, verschieden ausgebildet sein kann. Die Mulde 7 ist bei diesem Ausführungsbeispiel unsymetrisch zu den Enden 3, 4 der Stange 2 angeordnet, damit die Mulde in Verbindung mit einem Distanzausgleichund Verspannelement in allen Höhen der Wanne sich in der Mitte befindet. Der Querschnitt der Stange ist im Bereich der Mulde 7 oval und läuft auf dem mittleren Radius im Bereich der oberen Krümmungen auf einen kreisförmigen Querschnitt aus.

Figur 2 zeigt die Badewanne 8 im Querschnitt mit der im Gebrauchszustand einliegenden Körperstütze. Die Halterungen 5 und 6 liegen mit ihrer der jeweiligen Seitenwand 10 bzw. 11 zugewandten Fläche 12, 13 glatt an der leicht schrägen Seitenwand an. Die dargestellte Körperstütze 1 weist einseitig ein Distanzausgleich- und Verspannelement mit einem verdrehbaren Rohrstück 32 auf das zur besseren Griffigkeit von der Oberfläche aufgerauht und bauchig mit einer Wölbung 39 ausgeführt ist.

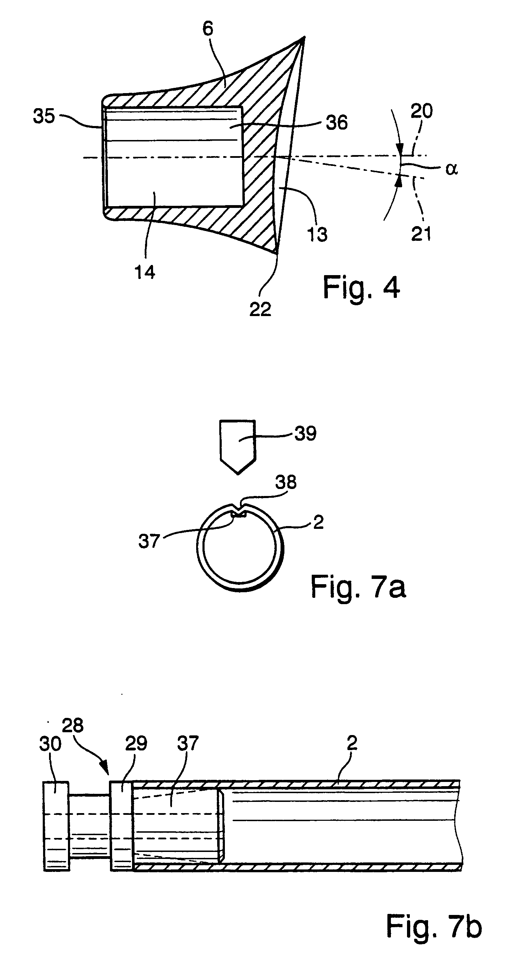

Figur 4 zeigt den Querschnitt durch einen Stopfen mit der Ausnehmung 14, in die das Ende 3, 4 der Stange bis zum Anschlag einsteckbar ist. Der in dieser Figur dargestellte Stopfen 6 entspricht prinzipiell dem auf das andere Ende der Stange aufsetzbaren Stopfen 5. Zum weiteren Ausgleich auf die Schräge der Badewanne ist am Boden der Durchmesser der Stopfen 5, 6 gegenüber dem Rohrdurchmesser um ca. 1,5 mm vergrößert. Dies gibt einen zusätzlichen Ausgleich von ca. 1° bis 2° in der Neigung in der Badewanne und erlaubt die Schwenkbewegung der Stopfen um das jeweilige Ende der Stange 2 in diesem Bereich. In dem Ausführungsbeispiel weist die Öffnung 35 einen geringeren Durchmesser auf als das Innere 36 der Ausnehmung 14.

Wie aus der Figur 4 außerdem ersichtlich, ist die Fläche 13 gegenüber der Längsachse 20 der Ausnehmung 14 bzw. der stopfenförmigen Halterung 6 um einen Winkel α geneigt, der ungefähr 9° beträgt. Der Winkel α ist in der Figur zwischen der Längsachse 20 und der Flächennormale 21 dargestellt und berücksichtigt die Neigung der Seitenwand 10, 11 der Badewanne. Um außerdem noch Unebenheiten an der Oberfläche der Seitenwände 10, 11 der Badewanne 2 auszugleichen, sind zusätzlich in dem äußeren Randbereich der Fläche 12, 13 eine umlaufende Dichtungslippe 22 vorgesehen.

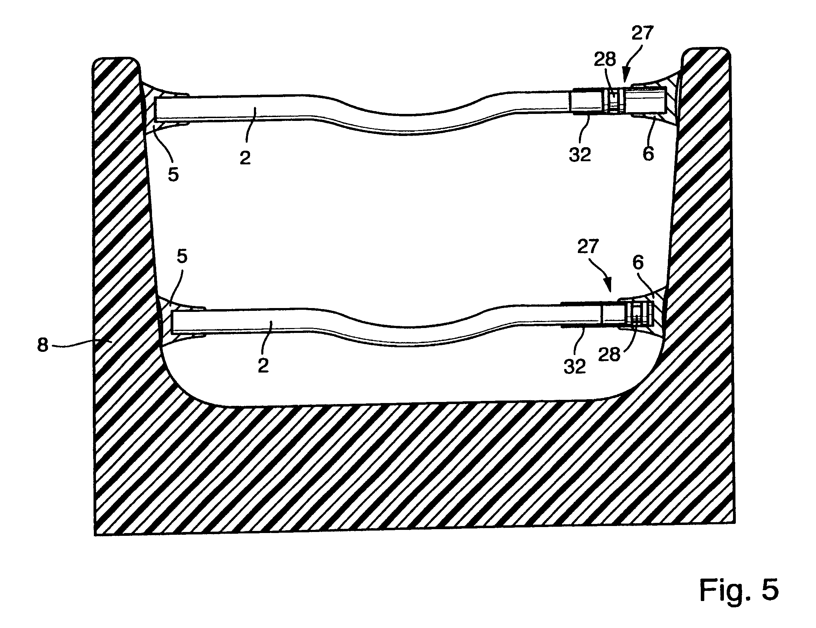

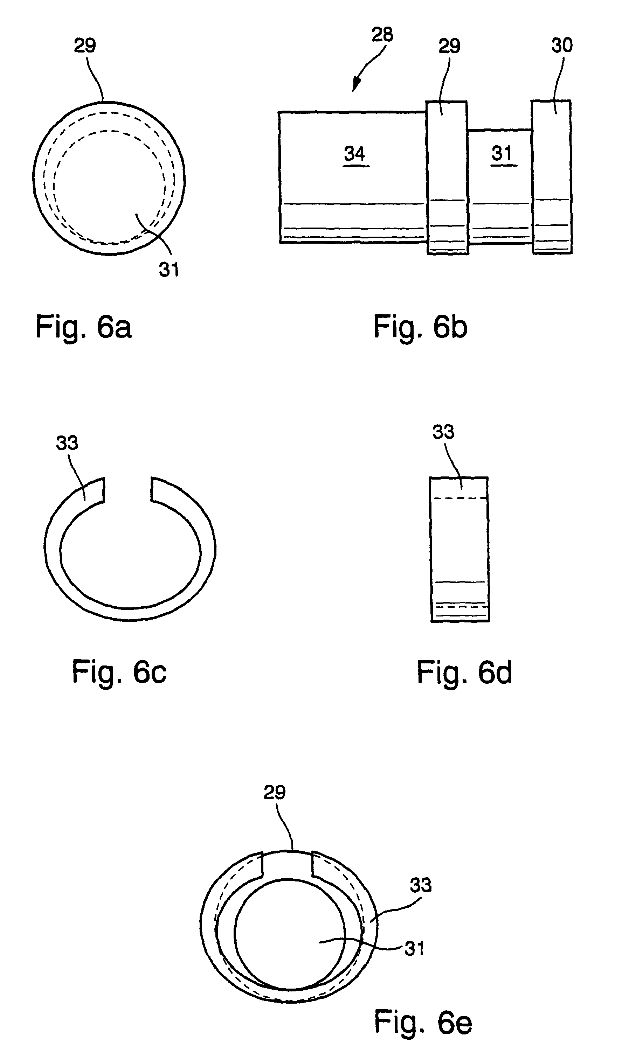

Die in der Figur 5 dargestellte Ausführungsform zeigt die Körperstütze 1 mit einer als Distanzausgleich- und Verspannelement ausgebildeten Halterung 27, die ein stufenloses Verstellen der Länge der Stange 2 und damit eine Anpassung an die Höhe in der Badewanne 8 erlaubt. Die Halterung 27 umfaßt ein Zwischenstück 28, das an einem stimseitigen Ende der rohrförmig ausgebildeten Stange 2 eingesteckt wird. Das Zwischenstück 28 weist zwei konzentrisch zur Längsachse angeordnete Führungen 29, 30 auf, die einen geringfügig größeren Durchmesser als die Stange 2 aufweisen. Damit dient die eine Führung zusätzlich als Anschlag gegen die Stange 2. Das Zwischenstück wird in die Stange 2 eingesteckt und mittels eines Werkzeuges 39 (Fig. 7b) mit der Stange 2 derart verquetscht, daß die Stange 2 mit einer Feder 38 am Ende der Stange tiefer in eine entsprechende Längsnut 37 in dem Zwischenstück eingreift (Fig. 7). Damit ist das Zwischenstück fest an der Stange arretiert. In dem Zwischenbereich 31 zwischen den beiden Führungen 29, 30 wird ein in der Figur 6 näher beschriebenes Klemmteil 33 eingelegt. Über dem Zwischenstück befindet sich ein Rohrstück 32, welches an seinem freien Ende in der Ausnehmung 14 gehalten ist. Über das Zwischenstück 28 erfolgt einerseits die Längenanpassung und durch Drehen die Verspannung des Zwischenstücks 28 mit der Stange 2.

Das Rohrstück 32 ist zusätzlich, aus der Figur nicht ersichtlich, in seinem Inneren mit einer Längsrillung versehen um die Griffigkeit und Führung auf den Führungen 29, 30 und die Mitnahmefähigkeit des Zwischenstücks 28 zu verbessern.

Figur 6 zeigt das Zwischenstück 31 mit den Führungen 29 und 30, dem Zwischenbereich 31 und dem in die Stange 2 einsteckbaren Steckbereich 34. Das Zwischenstück selbst ist aus PVC oder PS gefertigt. Wie aus der Figur 9a und 9b ersichtlich, ist der Zwischenbereich 31 exzentrisch zu der Längsachse des Zwischenstücks bzw. der Stange angeordnet. Über den Zwischenbereich wird ein C-förmiges Klemmteil 33 gemäß der Figur 9c und 9d gesteckt. Aus der Figur 9e ist ersichtlich, wie das Klemmteil 33 um den exzentrischen Zwischenbereich 31 liegt. Durch das in dieser Figur nicht dargestellte Rohrstück 32 wird das Klemmteil 33 zusammengedrückt und bewirkt je nach Lage zu dem Zwischenbereich 31 entweder eine Verklemmung des Rohrstücks 32 oder erlaubt die axiale Verschiebung des Rohrstücks über die Führung 29 und 30. In dem Ausführungsbeispiel sind die beiden Führungen 29, 30 insgesamt breiter ausgebildet als das Klemmteil 33. Je nach zulässigem Spiel zwischen dem Klemmteil 33 und dem Zwischenbereich 31 ist eine größere oder geringere Verdrehung des Rohrstücks erforderlich, um eine Verspannung herbeizuführen.

## Patentansprüche

1. Körperstütze für Badewannen, aus einer Stange mit an der Stange angebrachten Halterungen zum Abstützen der Stange an den beiden gegenüberliegenden Längsseiten der Badewanne, einer im mittleren Bereich angeordneten Mulde zur Aufnahme eines Nackens und mindestens einem Distanzausgleichs- und Verspannelement zur Fixierung der Körperstütze in beliebiger Höhe an den Seitenwänden (10, 11) der Badewanne (8), wobei die Halterungen (27) an den Enden (3,4) der Stange (2) angeordnet sind, sich im wesentlichen in Längsachsenrichtung der Stange erstrecken und als becherförmiger Stopfen (5, 6) ausgebildet sind, der in seinem Inneren eine auf den Umfang der Stange abgestimmte Ausnehmung (14) zur Aufnahme des Endbereichs (3, 4) der Stange (2) und eine der Badewannenwand (10, 11) zugewandte Anlagefläche (12, 13) mit einem Radius zur Erzeugung eines Saugeffekts aufweist, **dadurch gekennzeichnet, daß** die Halterung (27) ein verdrehbares Rohrstück (32) umfaßt, das der stufenlosen Längenverstellung und gleichzeitigen Arretierung dient, indem das Rohrstück (32) über ein in das stirnseitige Ende der Stange (2) einsteckbares Zwischenstück (28) mit zwei voneinander beabstandeten, konzentrisch zur Längsachse angeordneten Führungen (29, 30) mit einem den Stangendurchmesser geringfügig übeschreitenden Durchmesser geführt und zwischen den Führungen (29, 30) ein exzentrischer Zwischenbereich (31) mit einem C-förmig ausgebildeten Klemmelement (33), das über den Zwischenbereich (31) geschoben ist, angeordnet, das Zwischenstück (28) bis zum stirnseitigen Ende in die Ausnehmung (14) des Stopfens eingesteckt ist und der Stopfen aus einem elastischen tragfesten Material besteht und die der Badewannenwand (10, 11) zugewandte Fläche (12, 13) gegenüber der Längsachse (20) der Ausnehmung (14) geneigt ist.

2. Körperstütze nach Anspruch 1, **dadurch gekennzeichnet, daß** die Fläche (12, 13) gegenüber der Längsachse (20) der Ausnehmung (14) um 6 bis 12°, vorzugsweise um 9°, geneigt ist.

3. Körperstütze nach Anspruch 2, **dadurch gekennzeichnet, daß** die Ausnehmung (14) im Bereich der Öffnung (35) mit einem größeren Querschnitt als im Inneren (36) ausgebildet ist, um eine geringe Schwenkbewegung des Stopfens (5, 6) als Toleranzausgleich zu erlauben.

4. Körperstütze nach einem der vorangegangenen Ansprüche, **dadurch gekennzeichnet, daß** die Fläche (12, 13) am äußeren Randbereich eine Dichtlippe (22) aufweist.

5. Körperstütze nach einem der vorangegangenen Ansprüche, **dadurch gekennzeichnet, daß** das Zwischenstück (28) mittels einer Nut- und Federkonstruktion (37, 38) in der Stange (2) fixiert ist, wobei die Stange zum Ende der Stange mit größerer Tiefe in die entsprechende Nut (37) des Zwischenstücks eingepreßt ist.

6. Körperstütze nach einem der vorangegangenen Ansprüche, **dadurch gekennzeichnet, daß** das Rohrstück (32) auf seiner Oberfläche Mittel zum besseren Greifen in Form von Aufrauhungen, Rillen, Noppen, Rändelung oder dgl. und/oder eine sich über die Länge des Rohrstückes erstreckende bauchige Wölbung (36) aufweist.

7. Körperstütze einem der vorangegangenen Ansprüche, **dadurch gekennzeichnet, daß** die Länge des Rohrstücks (32) der Länge vom freien Ende des Zwischenstücks (28) bis zum Beginn der Krümmung der Stange (2) entspricht.

8. Körperstütze nach einem der vorangegangenen Ansprüche, **dadurch gekennzeichnet, daß** die Stange (2) im Bereich der Mulde (7) einen ovalen Querschnitt aufweist.

9. Körperstütze nach einem der vorangegangenen Ansprüche, **dadurch gekennzeichnet, daß** im Bereich der Mulde (7) als Polsterung ein aus einem nichtsaugenden elastischen Material bestehendes Rohrstück (40) um die Stange (2) angeordnet ist.

## Claims

1. A body support for bath tubs, comprising a rod with holders attached to the rod to support the rod at the two opposite longitudinal sides of the bath tub, a depression located in the central region to accommodate a neck and at least one distance-compensating and clamping element to affix the body support at any height to the side walls (10, 11) of the bath tub (8), wherein the holders (27) are arranged at the ends (3, 4) of the rod (2), they extend essentially in the direction of the longitudinal axis of the rod and are constructed as cup-shaped stoppers (5, 6), which in their interior have a recess (14) matched to the circumference of the rod to accommodate the end region (3, 4) of the rod (2) and a contact surface (12, 13) facing the wall of the bath tub (10, 11) having a radius to produce a suction effect, **characterised in that** the holder (27) comprises a twistable pipe section (32) which is used for continuous length adjustment and simultaneous locking, where the pipe section (32) is guided over an intermediate piece (28) which can be inserted into the front end of the rod (2) and having two guides (29, 30) some distance apart, arranged concentrically with respect to the longitudinal axis, with a diameter slightly exceeding the diameter of the rod, and between the guides (29, 30) there is located an eccentric intermediate region (31) with a C-shaped clamping element (33) which is pushed over the intermediate region (31), the intermediate piece (28) is inserted into the recess (14) of the stopper as far as the front end and the stopper consists of an elastic load-resistant material and the surface (12, 13) facing the bath tub wall (10, 11) is inclined relative to the longitudinal axis (20) of the recess (14).

2. A body support according to claim 1, **characterised in that** the surface (12, 13) is inclined relative to the longitudinal axis (20) of the recess (14) by 6 to 12°, preferably by 9°.

3. A body support according to claim 2, **characterised in that** in the vicinity of the opening (35) the recess (14) is constructed with a larger cross-section than in the interior (36) to allow slight tilting movement of the stopper (5, 6) as compensation for tolerance.

4. A body support according to one of the preceding claims, **characterised in that** the surface (12, 13) has a sealing lip (22) at the outer edge region.

5. A body support according to one of the preceding claims, **characterised in that** the intermediate piece (28) is fixed in the rod (2) by means of a groove and spring structure (37, 38) wherein the rod is pressed into the corresponding groove (37) of the intermediate piece to a greater depth at the end of the rod.

6. A body support according to one of the preceding claims, **characterised in that** on its surface the pipe section (32) has means for better gripping in the form of roughness, grooves, bosses, milling or the like and/or has a bulging curvature (36) extending over the length of the pipe section.

7. A body support according to one of the preceding claims, **characterised in that** the length of the pipe section (32) corresponds to the length from the free end of the intermediate piece (28) to the beginning of the curvature of the rod (2).

8. A body support according to one of the preceding claims, **characterised in that** the rod (2) has an oval cross-section in the vicinity of the depression (7).

9. A body support according to one of the preceding claims, **characterised in that** in the vicinity of the depression (7) a pipe section (40) consisting of a non-absorbing elastic material is provided around the rod (2) as padding.

## Revendications

1. Support pour le corps à monter dans une baignoire, consistant en une barre avec des supports placés sur la barre pour supporter la barre sur les deux côtés longitudinaux opposés de la baignoire, en un creux destiné à recevoir la nuque disposé dans la zone centrale et en au moins un élément d'écartement et de serrage pour la fixation du support pour le corps à n'importe quelle hauteur aux parois latérales (10, 11) de la baignoire (8), les supports (27) étant disposés aux extrémités (3, 4) de la barre (2), s'étendant globalement dans le sens de l'axe longitudinal de la barre et étant conçus comme un tampon en forme de godets (5, 6) qui présente à l'intérieur un évidement (14) coïncidant avec le volume de la barre destiné à recevoir l'extrémité (3, 4) de la barre (2) et une surface de dépôt (12, 13) tournée vers la paroi de la baignoire (10, 11), avec un rayon pour la création d'un effet d'aspiration, **caractérisé en ce que** le support (27) intègre une pièce tubulaire (32) pouvant pivoter, qui sert au réglage sans paliers en longueur et en même temps d'arrêt, du fait que la pièce tubulaire (32) est guidée au moyen d'une pièce intermédiaire (28) insérable dans l'extrémité frontale de la barre (2) grâce à deux guides (29, 30) écartés l'un de l'autre, disposés de manière concentrique par rapport à l'axe longitudinal, d'un diamètre excédant légèrement le diamètre de la barre et qu'entre les guides (29, 30), se trouve une zone intermédiaire excentrique (31) avec un élément de blocage (33) conçu en forme de C, qui est poussé au dessus de la zone intermédiaire (31), que la pièce intermédiaire (28) est encastrée jusqu'à l'extrémité frontale dans l'évidement (14) du tampon et que le tampon consiste en une matière élastique résistant au poids et que la surface (12, 13) tournée vers la paroi de la baignoire (10, 11) est inclinée par rapport à l'axe longitudinal (20) de l'évidement (14).

2. Support pour le corps selon la revendication 1, **caractérisé en ce que** la surface (12, 13) est inclinée de 6 à 12 °C, de préférence de 9 °C, par rapport à l'axe longitudinal (20) de l'évidement (14).

3. Support pour le corps selon la revendication 2, **caractérisé en ce que** l'évidement (14) est conçu, dans la zone de l'ouverture (35), avec une section transversale supérieure à l'intérieur (36), afin de permettre un faible mouvement pivotant du tampon (5, 6) comme équilibrage de tolérance.

4. Support pour le corps selon une des revendications précédentes, **caractérisé en ce que** la surface (12, 13) présente une lèvre d'étanchéité (22) sur sa zone de bordure extérieure.

5. Support pour le corps selon une des revendications précédentes, **caractérisé en ce que** la pièce intermédiaire (28) est fixée, au moyen d'un système à rainure et à ressort (37, 38), à la barre (2), la barre étant, vers l'extrémité de barre, enfoncée à une plus grande profondeur dans la rainure correspondante (37) de la pièce intermédiaire.

6. Support pour le corps selon une des revendications précédentes, **caractérisé en ce que** la pièce tubulaire (32) présente sur sa surface des moyens pour améliorer la prise, sous forme de rugosités, nervures, noppes, crénelages ou similaires et/ou un renflement (36) s'étendant sur la longueur de la pièce tubulaire.

7. Support pour le corps selon une des revendications précédentes, **caractérisé en ce que** la longueur de la pièce tubulaire (32) équivaut à la longueur allant de l'extrémité dégagée de la pièce intermédiaire (28) jusqu'au début du renflement de la barre (2).

8. Support pour le corps selon une des revendications précédentes, **caractérisé en ce que** la barre (2) présente, dans la zone du creux (7), une section transversale ovale.

9. Support pour le corps selon une des revendications précédentes, **caractérisé en ce que**, dans la zone du creux (7), une pièce tubulaire (40) consistant en une matière élastique non absorbante est disposée comme capitonnage autour de la barre (2).
